# EUROPÄISCHE PATENTSCHRIFT

(11) **EP 3 663 728 B1**
(45) Veröffentlichungstag und Bekanntmachung des Hinweises auf die Patenterteilung: **18.08.2021**
(21) Anmeldenummer: 19212980.7
(22) Anmeldetag: 02.12.2019
(51) Int. Cl.: G01F 1/66, G01F 15/14

(54) **MESSEINRICHTUNG ZUR ERMITTLUNG EINER FLUIDGRÖSSE UND VERFAHREN ZUR HERSTELLUNG VON MESSEINRICHTUNGEN**
MEASURING DEVICE FOR DETECTING A FLUID QUANTITY AND PROCESS OF MANUFACTURING MEASURING DEVICES
DISPOSITIF DE MESURE PERMETTANT DE DÉTERMINER UNE GRANDEUR DE FLUIDE ET PROCÉDÉ DE FABRICATION DES DISPOSITIFS DE MESURE

(30) Priorität: 05.12.2018 DE 102018009569
(43) Veröffentlichungstag der Anmeldung: 10.06.2020
(73) Patentinhaber: Diehl Metering GmbH, 91522 Ansbach (DE)
(72) Erfinder: Schmidt, Axel, 91522 Ansbach (DE); Zellner, Claus, 91522 Ansbach (DE); Mayle, Michael, 91522 Ansbach (DE); Benkert, Andreas, 91522 Ansbach (DE); Sturm, Thomas, 91623 Sachsen (DE)
(74) Vertreter: Diehl Patentabteilung

(56) Entgegenhaltungen:
- DE-A1- 3 941 544
- DE-A1- 19 944 411
- DE-A1-102015 008 146
- DE-A1-102017 004 038
- DE-U1-202012 104 853
- US-A1- 2015 276 446

## Beschreibung

Die Erfindung betrifft eine Messeinrichtung zur Ermittlung einer eine Fluidströmung eines Fluids betreffenden Fluidgröße mit einer Steuereinrichtung, einem Messrohr, das dazu dient, das Fluid in eine Durchflussrichtung zu führen, und einem ersten und einem zweiten voneinander beabstandet an dem Messrohr angeordneten Schwingungswandler, wobei die Steuereinrichtung dazu eingerichtet ist, den ersten und/oder den zweiten Schwingungswandler derart anzusteuern, dass eine durch eine oder eine jeweilige Seitenwand des Messrohrs geführte Welle angeregt wird, wobei die geführte Welle Kompressionsschwingungen des Fluids anregt, die über das Fluid zu dem jeweils anderen Schwingungswandler führbar und dort durch die Steuereinrichtung zur Ermittlung von Messdaten erfassbar sind, wobei die Steuereinrichtung dazu eingerichtet ist, die Fluidgröße in Abhängigkeit der Messdaten zu ermitteln. Daneben betrifft die Erfindung ein Verfahren zur Herstellung von wenigstens zwei voneinander verschiedenen Messeinrichtungen.

Eine Möglichkeit, einen Durchfluss durch ein Messrohr zu messen, sind Ultraschallzähler. Bei diesen wird wenigstens ein Ultraschallwandler genutzt, um eine Ultraschallwelle in das durch das Messrohr strömende Fluid einzukoppeln, wobei diese auf einem geraden Weg oder nach mehreren Reflexionen an Wänden oder speziellen Reflektorelementen zu einem zweiten Ultraschallwandler geführt wird. Aus der Laufzeit der Ultraschallwelle zwischen den Ultraschallwandlern bzw. aus einem Laufzeitunterschied bei einer Vertauschung von Sender und Empfänger kann eine Durchflussgeschwindigkeit durch das Messrohr bestimmt werden.

Bei einer direkten Einkopplung der Ultraschallwellen in das Fluid wird typischerweise nur ein Bruchteil des durchströmten Volumens zwischen den Ultraschallwandlern durch die eingestrahlten Ultraschallwellen durchquert, womit auch nur Informationen aus diesem Teilvolumen genutzt werden können. Dies kann zu einer starken Abhängigkeit der Messgröße von dem Strömungsprofil führen, wobei sich das Strömungsprofil in Abhängigkeit der Strömungsgeschwindigkeit oder von anderen Faktoren ändern kann. Diese Strömungsprofilabhängigkeit kann typischerweise nur teilweise kompensiert werden, womit aus der unvollständigen Berücksichtigung des Strömungsprofils Messfehler resultieren können.

Der berücksichtigte Bereich des Volumens zwischen den Ultraschallwandlern kann vergrößert werden, wenn das Fluid nicht direkt angeregt wird, sondern zunächst geführte Wellen, insbesondere Lamb-Wellen, in einer Seitenwand des Messrohrs angeregt werden, die wiederum das Fluid zu Kompressionsschwingungen anregen. Ansätze zur Einkopplung geführter Wellen in eine Wand des Messrohrs sind beispielsweise aus der Druckschrift US 4735097 A und aus dem Artikel G. Lindner, "Sensors and actuators based on surface acustic waves propagating along solid-liquid interfaces", J. Phys. D: Appl .Phys. 41 (2008) 123002, bekannt. Darüber hinaus spezifiziert die DE 10 2017 004038 A1 eine Messeinrichtung zur Ermittlung einer eine Fluidströmung eines Fluids betreffenden Fluidgröße mit zwei Schwingungswandlern, welche derart angesteuert werden, dass eine durch eine oder eine jeweilige Seitenwand des Messrohrs geführte Welle angeregt wird, wobei die geführte Welle Kompressionsschwingungen des Fluids anregt.

Durchflusszähler und andere Messeinrichtungen zur Messung von Fluideigenschaften sollen typischerweise über einen weiten Bereich von Durchflussgeschwindigkeiten eine hohe Messgenauigkeit ermöglichen. Im Bereich von niedrigen Durchflussmengen bzw. Flussgeschwindigkeiten ist eine Messgenauigkeit typischerweise durch die Zeitauflösung der Messung der Signallaufzeiten begrenzt. Durch eine Verringerung des Innendurchmessers des Messrohrs kann die Strömungsgeschwindigkeit zwar erhöht und somit das Problem der Zeitauflösung verringert werden. Hieraus resultiert jedoch zugleich ein höherer Druckverlust an der Messeinrichtung. Je nach konkretem Anwendungsfall muss somit zwischen dem Erreichen eines geringen Druckabfalls und einer hohen Messgenauigkeit abgewogen werden, sodass für unterschiedliche Anwendungsfälle unterschiedliche Messrohre verwendet werden sollten, was dazu führt, dass eine große Palette deutlich unterschiedlicher Durchflusszähler bereitgestellt werden muss. Dies führt zu einer großen erforderlichen Produktpalette beim Hersteller mit den damit verbundenen Herausforderungen bezüglich Herstellung und Lagerhaltung und zu hohen Kosten beim Anwender, falls sich entsprechende Anforderungen ändern sollten. Eine Alternative die Messgenauigkeit bei geringen Durchflüssen zu verbessern wäre es, die Zeitauflösung durch eine Verbesserung der Sensorik bzw. Elektronik der Messeinrichtung zu verbessern, was jedoch einen hohen technischen Aufwand erfordert.

Der Erfindung liegt somit die Aufgabe zugrunde, eine Messgenauigkeit für einen Durchfluss betreffende Fluidgrößen bei niedrigen Durchflussmengen bedarfsgerecht mit geringem technischen Aufwand zu verbessern.

Die Aufgabe wird durch eine Messeinrichtung der eingangs genannten Art gelöst, wobei in das Messrohr wenigstens ein Messeinsatz derart eingesetzt ist, dass zumindest in einem zwischen dem ersten und dem zweiten Schwingungswandler liegenden Messabschnitt des Messrohrs ein Durchmesser des durch die Fluidströmung nutzbaren Strömungsquerschnitts durch den Messeinsatz in eine Querrichtung gegenüber dem Innendurchmesser des Messrohrs in die Querrichtung reduziert ist und ein Durchmesser des Strömungsquerschnitts in eine senkrecht auf der Querrichtung stehende Hochrichtung gleich dem Innendurchmesser des Messrohres in diese Hochrichtung ist.

Im Rahmen der Erfindung wurde erkannt, dass es für Messeinrichtungen, die mit in einer Wand geführten Wellen arbeiten, durch die beschriebene Anordnung ermöglicht wird, den Strömungsquerschnitt einer durch das Messrohr geführten Strömung durch einen separat von dem Messrohr ausgebildeten Messeinsatz zu reduzieren. Dies ermöglicht es, bedarfsgerecht den genutzten Strömungsquerschnitt und somit die erreichbare Messauflösung bzw. den Druckabfall mit sehr geringem technischen Aufwand zu modifizieren, da ausschließlich der Messeinsatz bzw. die Messeinsätze gewechselt werden müssen. Dies ermöglicht es, Messeinrichtungen für eine Vielzahl von Anforderungen einfach dadurch herzustellen, dass ansonsten identische Messeinrichtungen mit voneinander unterschiedlichen Messeinsätzen versehen werden.

Die Nutzung von separat von dem Messrohr ausgebildeten Messeinsätzen zur Modifikation eines Strömungsquerschnitts ist prinzipiell aus dem Bereich von Durchflusszählen bekannt, bei denen eine unmittelbare Einkopplung von Ultraschallwellen in das Fluid erfolgt. Diese Messeinsätze weisen eine Rohrform auf und umgreifen das Fluid somit allseitig. Durch ein Einkoppeln der Ultraschallwellen in Durchflussrichtung oder durch die Nutzung von Reflexionselementen wird der Ultraschall bei diesen Durchflusszählern im Bereich des Messeinsatzes parallel zur Durchflussrichtung geführt. Bei der Nutzung von geführten Wellen werden hingegen Kompressionsschwingungen des Fluids entlang dem gesamten Bereich angeregt, in dem sich die geführte Welle ausbreitet. Es wird somit eine in Längsrichtung des Messrohrs ausgedehnte Wellenfront abgestrahlt, die allenfalls mit sehr großflächigen Reflexionselementen parallel zur Durchflussrichtung gerichtet werden könnte. Diese würden jedoch zu einer starken Beeinflussung des Strömungsprofils führen, wobei ein Vorteil der Nutzung von geführten Wellen jedoch ist, dass eine Nutzung von Reflexionselementen und die damit einhergehende Störung des Strömungsprofils vermieden werden kann. Im Rahmen der Erfindung wurde jedoch erkannt, dass stattdessen ein Messeinsatz oder mehrere Messeinsätze genutzt werden können, die die Fluidströmung nur in Querrichtung seitlich führen, also nur in Querrichtung den nutzbaren Strömungsquerschnitt reduzieren. Am einfachsten Fall kann beispielsweise ein quadratisches Messrohr genutzt werden und durch Einsetzen von einem oder vorzugsweise zwei gegenüberliegenden Messeinsätzen kann die Breite des Strömungsquerschnitts reduziert werden. Zugleich entspricht der Durchmesser des Strömungsquerschnitts in Hochrichtung dem Innendurchmesser des Messrohrs in diese Richtung, das heißt mit anderen Worten, dass der Strömungsquerschnitt in Hochrichtung durch das Messrohr beschränkt wird. Somit ist jedoch an den in Hochrichtung beabstandeten Umfangsabschnitten des Messrohrs eine im Wesentlichen ungestörte Führung von geführten Wellen, eine Anregung von Kompressionsschwingungen, eine Reflektion in dieser Kompressionsschwingungen und/oder eine Anregung einer weiteren geführten Welle durch eine einlaufende Kompressionsschwingung des Fluids möglich, sodass problemlos eine Messung mit Hilfe von geführten Wellen durchgeführt werden kann.

Durch die Einschränkung des Strömungsquerschnitts in Querrichtung kann insbesondere ein zumindest näherungsweise rechteckiges Strömungsprofil realisiert werden, wobei eine Breite dieses rechteckigen Strömungsprofils von dem genutzten Messeinsatz bzw. den genutzten Messeinsätzen abhängt.

Zur Ermittlung eines Durchflussvolumens kann eine Laufzeitdifferenz zwischen der Laufzeit der angeregten Welle von dem ersten Schwingungswandler zum zweiten Schwingungswandler und umgekehrt über das Fluid bestimmt werden. Der Laufzeitunterschied ist hierbei proportional zu dem Quotienten aus Durchflussvolumen und Breite des Strömungsquerschnitts und somit umgekehrt proportional zu der Breite. Durch bekannte Formeln der Fluiddynamik kann ermittelt werden, dass der Druckabfall umgekehrt proportional zur a-ten Potenz der Breite ist, wobei a zwischen vier und fünf ist. Somit führt eine Verringerung der Breite zwar zu einer Erhöhung der Messgenauigkeit, zugleich aber zu einer starken Erhöhung des Druckabfalls. Durch bedarfsgerechte Wahl des genutzten Messeinsatzes bzw. der genutzten Messeinsätze kann hierbei eine optimale Abwägung zwischen Druckabfall und Zeitauflösung erreicht werden.

Der Messbereich, also jener Bereich, in dem der Messeinsatz den Strömungsquerschnitt in Querrichtung einschränkt und in Hochrichtung unverändert lässt, erstreckt sich in Durchflussrichtung vorzugsweise über den gesamten Bereich zwischen dem ersten und dem zweiten Schwingungswandler. Vorzugsweise schließt der Messbereich zusätzlich die Bereiche, in denen der erste und zweite Schwingungswandler an der Seitenwand angeordnet sind, zumindest teilweise ein. Hierdurch kann erreicht werden, dass der Strömungsquerschnitt über den gesamten messrelevanten Bereich eingeschränkt wird und im Messbereich keine starken Änderungen des Strömungsprofils auftreten, womit eine optimale Messgenauigkeit erreicht werden kann.

Der erste und der zweite Schwingungswandler können an dem gleichen Umfangsabschnitt des Messrohrs angeordnet sein, der in die Hochrichtung von einem gegenüberliegenden Umfangsabschnitt beabstandet ist, oder der erste und der zweite Schwingungswandler können aneinander gegenüberliegenden Umfangsabschnitten des Messrohrs angeordnet sein, die in Hochrichtung voneinander beabstandet sind. Erfindungsgemäß ist der Durchmesser des Strömungsquerschnitts in die Hochrichtung gleich dem Innendurchmesser des Messrohrs. Anders ausgedrückt liegt die Innenwand des Messrohrs in den Umfangsabschnitten, an denen die Schwingungswandler angeordnet sind bzw. an dem Umfangsabschnitt, der dem Umfangsabschnitt, an dem die Schwingungswandler angeordnet sind, gegenüberliegt, frei am Fluid an, sodass durch eine geführte Welle in der Seitenwand unmittelbar eine Kompressionsschwingung in dem Fluid angeregt werden kann.

Im Messabschnitt können zwei separate Messeinsätze angeordnet sein und/oder ein innerhalb des Messabschnitts liegender Bereich des Messeinsatzes kann durch zwei Messeinsatzabschnitte gebildet werden, wobei die Messeinsätze oder die Messeinsatzabschnitte in die Querrichtung voneinander beabstandet sind, um den Strömungsquerschnitt in Querrichtung durch ihre einander zugewandten Wände zu begrenzen. Der Strömungsquerschnitt kann somit in Querrichtung beidseitig durch die Messeinsätze bzw. Messeinsatzabschnitte begrenzt sein. Dies kann beispielsweise dazu dienen, auch bei Nutzung eines Messrohrs mit einem runden Innenquerschnitt ein näherungsweise rechteckiges Strömungsprofil bereitzustellen. Insgesamt kann durch de Nutzung der beiden beabstandeten Messeinsätze bzw. Messeinsatzabschnitte eine Symmetrie des Strömungsprofils erreicht bzw. erhalten bzw. bedarfsgerecht auch gezielt gebrochen werden.

Der Strömungsquerschnitt kann zumindest im Messabschnitt in Querrichtung durch zwei parallele Wände begrenzt werden, die durch den Messeinsatz oder die Messeinsätze gebildet werden. Wird ein Messeinsatz genutzt, können insbesondere, wie bereits erläutert, beabstandete Messeinsatzabschnitte genutzt werden, um die parallelen Wände zu bilden. Aus der beschriebenen Anordnung kann ein rechteckiges bzw. zumindest näherungsweise rechteckiges Strömungsprofil über die gesamte Länge des Messbereichs resultieren. Dies kann eine besonders einfache Auswertung der Messdaten ermöglichen, da ein gemessener Laufzeitunterschied zwischen den Ausbreitungsrichtungen der angeregten Wellen hierbei zumindest näherungsweise proportional zum Durchflussvolumen ist.

Der Messeinsatz kann wenigstens eine sich in Strömungsrichtung erstreckende Vertiefung aufweisen, die den Strömungsquerschnitt vergrößert. Insbesondere können zwei beabstandete Messeinsätze bzw. Messeinsatzabschnitte in ihrer dem Fluid zugewandten Seitenfläche jeweils wenigstens eine solche Vertiefung aufweisen. Durch die Vertiefung, die auch als Rille, Furche oder Ausstülpung bezeichnet werden kann, wird eine Art Nebenkanal gebildet, durch den ein Teil des durch das Messrohr geführten Fluids strömen kann. Die Verteilung des Fluidstroms auf den Bereich der Vertiefung oder der Vertiefungen und auf den Bereich, der außerhalb der Vertiefung bzw. der Vertiefungen liegt, hängt von der Strömungsgeschwindigkeit ab. Da die Abmessungen der Vertiefung verglichen mit der Gesamtabmessung des Messrohrs relativ klein sein können, wechselwirkt jener Teil des Fluids, der im Bereich der Vertiefung geführt wird, stärker mit dem bzw. dem jeweiligen Messeinsatz als jener Teil des Fluids, der außerhalb der Vertiefung und insbesondere nahe an der Rohrmitte geführt wird mit den Messeinsätzen bzw. dem Messrohr interagiert. Ist der Durchfluss durch das Messrohr gering, so wird ein Großteil des Fluids nahe der Rohrmitte und somit außerhalb der Vertiefung oder Vertiefungen geführt. Mit zunehmendem größerem Durchfluss, insbesondere bei einem Übergang vom laminaren in den turbulenten Bereich, steigt die Flussgeschwindigkeit in der Nähe der Rohrwand relativ zu derjenigen in der Rohrmitte. Dies gilt insbesondere auch im Bereich der Vertiefung bzw. der Vertiefungen, sodass der Anteil des Fluids, der in der Vertiefung bzw. den Vertiefungen geführt wird, steigt. Das Verhältnis der Durchflussmenge pro Zeit durch die Vertiefung bzw. die Vertiefungen zu der Durchflussmenge pro Zeit durch den Bereich außerhalb der Vertiefung bzw. der Vertiefungen steigt somit mit steigender Gesamtdurchflussmenge.

Wird nun die Messung derart durchgeführt, dass die Kompressionswellen, insbesondere die Ultraschallwellen, im Wesentlichen ausschließlich durch den Bereich des Strömungsquerschnitts geführt werden, der außerhalb der Vertiefungen liegt, so wird näherungsweise ausschließlich jener Teil der Fluidströmung berücksichtigt, der im Bereich außerhalb der Vertiefung oder der Vertiefungen strömt. Bei geringen Durchflussmengen erfolgt, wie vorangehend erläutert, nahezu der gesamte Fluidtransport in diesem Bereich. Wird die Durchflussmenge stark erhöht, so wird ein größerer Teil des Fluids durch die Vertiefungen und somit an dem im Rahmen der Messung berücksichtigten Bereich vorbeigeführt. Dies führt dazu, dass die Durchflussmenge pro Zeit nicht mehr proportional zu der gemessenen Fluidgeschwindigkeit ist, sondern dass bei niedrigen Durchflussmengen eine demgegenüber relativ überhöhte Geschwindigkeit gemessen wird. Hierdurch können die obig beschriebenen Auflösungsprobleme bei niedrigen Durchflussmengen reduziert bzw. vermieden werden. Dadurch dass bei höheren Durchflussmengen die Vertiefung bzw. Vertiefungen stärker zum Fluidtransport beitragen, wird jedoch der Druckabfall an der Messeinrichtung bei hohen Durchflüssen reduziert. Somit kann durch das beschriebene Vorgehen der anfangs erläuterte scheinbare Widerspruch zwischen den Zielen eines geringen Druckabfalls am Messrohr und einer hohen Auflösung der Volumenmessung zumindest teilweise aufgehoben werden.

Die Vertiefung kann sich insbesondere über die gesamte Länge des Messabschnitts erstrecken. Die Breite einer jeweiligen Vertiefung kann mehr als 3 % oder 5 % oder 10 % des Durchmessers des Strömungsquerschnitts in Hochrichtung und/oder weniger als 50 % oder 30 % oder 20 % des Durchmessers des Strömungsquerschnitts in Hochrichtung sein. Die maximale Tiefe der Vertiefung kann mehr als 10 % oder 20 % und weniger als 90% oder 80 % der Ausdehnung des Messeinsatzes oder Messeinsatzabschnitts in Querrichtung sein. Hierbei können verschiedene nutzbare Messeinsätze verschiedene Vertiefungsstrukturen aufweisen, sodass auch die Stärke der beschriebenen Nichtlinearität des Zusammenhangs zwischen Laufzeitdifferenz und Durchflussvolumen durch entsprechende Wahl eines zu nutzenden Messeinsatzes bzw. mehrerer zu nutzender Messeinsätze bedarfsgerecht angepasst werden kann.

Der Querschnitt der Innenfläche des Messrohrs kann zumindest in dem Messabschnitt kreisförmig oder quadratisch sein. Es können somit übliche und somit relativ günstige Rohre als Messrohr genutzt werden, wobei die Geometrie der Fluidströmung durch die Nutzung des wenigstens einen Messeinsatzes bedarfsgerecht angepasst werden kann.

Der Querschnitt der Innenfläche des Messrohrs kann zumindest in dem Messabschnitt kreisförmig sein, wobei eine Außenfläche des Messrohrs zumindest in einem Umfangsabschnitt, in dem der erste und/oder der zweite Schwingungswandler angeordnet sind, eben ist. Beispielsweise kann ein Messrohr mit kreisförmiger Innen- und Außenfläche durch eine spanabhebende Bearbeitung beispielsweise durch Schleifen oder Sägen, seitlich abgeflacht werden. Dies ermöglicht einerseits die Anordnung ebener Schwingungswandler an dieser Seitenfläche. Zum anderen kann hierdurch erreicht werden, dass eine in dem abgeflachten Bereich geführte Welle zumindest näherungsweise ausschließlich in diesem Bereich geführt wird, sodass insbesondere ein Einfluss eines Messeinsatzes, der ausschließlich außerhalb dieses Bereichs an der Innenfläche des Messrohrs anliegt, auf die Führung der geführten Welle bzw. die Dispersionsrelation der Seitenwand und somit die Schwingungsmoden des Messrohrs vermieden werden kann.

In einem außerhalb des Messabschnitts liegenden Zuflussabschnitt und/oder Abflussabschnitt kann der Durchmesser des Strömungsquerschnitts in die Hochrichtung durch den Messeinsatz reduziert sein. Dies kann einerseits dazu dienen, zwei im Messbereich voneinander beabstandete Messeinsatzabschnitte beispielsweise über Querstreben miteinander zu verbinden. Andererseits kann durch eine entsprechende Ausgestaltung der Zufluss- bzw. Abflussabschnitte des Messeinsatzes eine Strömungskonditionierung erfolgen, also beispielsweise das Fluid gezielt verwirbelt werden oder ähnliches.

Der Messeinsatz kann als ein, insbesondere spritzgegossenes, Kunststoffbauteil ausgebildet sein. Dies kann insbesondere vorteilhaft sein, wenn die obig erläuterten Zuflussabschnitte bzw. Abflussabschnitte genutzt werden sollen, da auch relativ komplexe Geometrien einfach herstellbar sein können. Der Messeinsatz und das Messrohr können insbesondere aus verschiedenem Material gebildet sein. Beispielsweise kann das Messrohr aus Metall oder einem anderen Kunststoff bestehen. Beispielsweise kann das Messrohr aus einem Material bestehen, das gut zur Führung von geführten Wellen geeignet ist, wobei geführte Wellen insbesondere allenfalls schwach bedämpft werden. Der Messeinsatz kann hingegen aus einem stärker schwingungsdämpfenden Material bestehen, da innerhalb von diesem keine Führung der geführten Welle erforderlich ist.

Es können mehrere Messeinsätze genutzt werden, wobei jeweils ein Messeinsatz oder mehrere Messeinsätze von einer zuflussseitigen Seite des Messrohrs und von einer Abflussseitigen Seite des Messrohrs in das Messrohr eingeführt werden können. Die von verschiedenen Seiten eingeschobenen Messeinsätze bzw. deren Messeinsatzabschnitte können zumindest näherungsweise bündig aneinander anliegen, sodass insbesondere eine jeweilige den Strömungsquerschnitt begrenzende Seitenwand durch zwei in Längsrichtung des Messrohrs aneinander anliegende, von verschiedenen Seiten in das Messrohr eingeführte Messeinsätze gebildet werden kann.

Bei der Nutzung von geführten Wellen, beispielsweise von Lamb-Wellen, zur Anregung von Kompressionsschwingungen des Fluids kann es problematisch sein, dass bei jeder Anregungsfrequenz mehrere Wellenmoden angeregt werden können. Da jedoch der Winkel, in dem Kompressionsschwingungen in das Fluid abgestrahlt werden, von der Phasengeschwindigkeit der geführten Welle abhängt, die typischerweise für unterschiedliche Anregungsmoden unterschiedlich ist, können hieraus verschiedene Ausbreitungspfade für die Kompressionsschwingung im Fluid resultieren, die allenfalls durch eine aufwändige Signalauswertung herausgerechnet werden können.

Um eine zumindest weitgehend modenreine Anregung einer geführten Welle zu erreichen, können Schwingungswandler genutzt werden, die eine definierte Anregungsgeometrie aufweisen. Insbesondere kann eine durch die Seitenwand des Messrohrs geführte Gesamtwelle durch einen jeweiligen Schwingungswandler angeregt werden, indem durch den jeweiligen Schwingungswandler in mehreren voneinander beabstandeten Anregungsbereichen jeweils in der Seitenwand geführte Teilwellen angeregt werden, die sich zu der jeweiligen Gesamtwelle überlagern, wobei die Anregungsgeometrie und weitere Anregungsparameter, insbesondere die Anregungsfrequenz, die Polarität der Anregung und/oder die Phasenlage zwischen den Anregungen, derart gewählt sind, dass eine zu dämpfende Schwingungsmode durch eine destruktive Interferenz der Teilwellen zumindest teilweise ausgelöscht wird. Beispielsweise können die Mitten der Anregungsbereiche einen Abstand aufweisen, der der halben Wellenlänge der zu dämpfenden Schwingungsmode entspricht und die Anregung kann in beiden Anregungsbereichen mit gleicher Phase und gleicher Polarität erfolgen. Andererseits kann eine umgekehrte Polarität bzw. eine Phasenverschiebung von 180° zwischen den Anregungen genutzt werden, wenn der Abstand zwischen den Mitten der Anregungsbereiche der Wellenlänge der zu dämpfenden Schwingungsmode entspricht.

Eine separate Anregung in den Anregungsbereichen kann beispielsweise dadurch realisiert werden, dass in jedem der Anregungsbereiche ein separates Schwingelement, beispielsweise ein piezoelektrisches Element, insbesondere parallel zu der Seitenwand, angeordnet ist.

Werden separat ansteuerbare Schwingelemente genutzt, kann ein Ansteuersignal für eines dieser Schwingelemente auch bereitgestellt werden, indem ein Ansteuersignal für ein anderes der Schwingelemente um eine vorgegebene Verzögerungszeit verzögert und optional invertiert wird. Wird als Verzögerungszeit die Laufzeit der geführten Welle zwischen den Mitten der Anregungsbereiche gewählt, die beispielsweise mit Hilfe der Dispersionsrelation der Messrohrwand gewonnen werden kann, und erfolgt eine invertierte Ansteuerung, so resultiert zumindest in eine Ausbreitungsrichtung eine im Wesentlichen vollständige Auslöschung der zu bedämpfenden Schwingungsmode.

Neben der erfindungsgemäßen Messeinrichtung betrifft die Erfindung ein Verfahren zur Herstellung von wenigstens zwei voneinander verschiedenen erfindungsgemäßen Messeinrichtungen, wobei für alle Messeinrichtungen gleiche Messrohre verwendet werden, in die voneinander verschiedene Messeinsätze eingesetzt werden, um die voneinander verschiedenen Messeinrichtungen auszubilden. Hierbei können vor oder nach dem Einsetzen der Messeinsätze die Schwingungswandler an dem Messrohr angebracht werden. Insbesondere können für die verschiedenen Messeinrichtungen auch die gleichen Schwingungswandler und die gleiche Steuereinrichtung verwendet werden. Das erfindungsgemäße Verfahren ermöglicht es, mit sehr geringem Aufwand, nämlich schlicht durch Wahl eines entsprechenden Messeinsatzes, Messeinrichtungen herzustellen, die auf verschiedene Anwendungsanforderungen angepasst sind. Beispielsweise können die hergestellten Messeinrichtungen voneinander verschiedene Druckabfälle an der jeweiligen Messeinrichtung und ein voneinander unterschiedliches Auflösungsvermögen für das gemessene Durchflussvolumen aufweisen. Dies kann, wie bereits erläutert, dadurch erreicht werden, dass durch Nutzung von entsprechenden Messeinsätzen verschiedene Durchmesser des Strömungsquerschnitts im Messabschnitt in Querrichtung für die verschiedenen Messeinrichtungen durch Nutzung entsprechender Messeinsätze realisiert werden.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: Ein Ausführungsbeispiel einer erfindungsgemäßen Messeinrichtung,
- Fig. 2 und 3: Detailansichten der in Fig. 1 gezeigten Messeinrichtung, und
- Fig. 4 und 5: Detailansichten weiterer Ausführungsbeispiele einer erfindungsgemäßen Messeinrichtung.

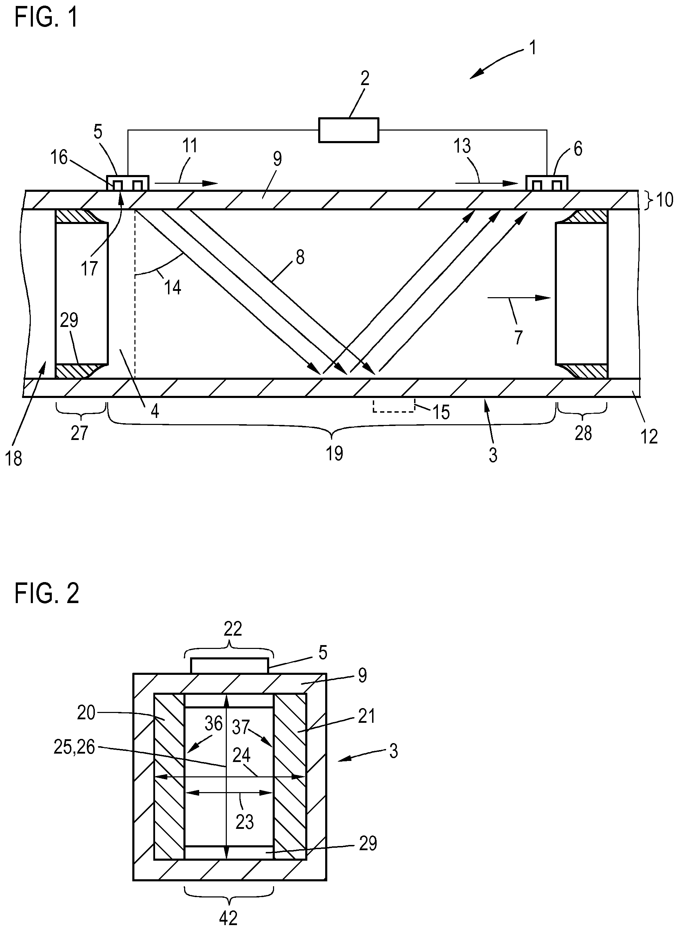

Fig. 1 zeigt eine Messeinrichtung 1 zur Ermittlung einer eine Fluidströmung betreffenden Fluidgröße. Das Fluid wird hierbei in eine durch den Pfeil 7 gezeigte Richtung durch einen Innenraum 4 eines Messrohrs 3 geführt. Um die Fluidgröße, insbesondere ein Durchflussvolumen, zu ermitteln, kann durch die Steuereinrichtung 2 eine Laufzeitdifferenz zwischen den Laufzeiten von einem ersten Schwingungswandler 5 zu einem zweiten Schwingungswandler 6 und umgekehrt ermittelt werden. Hierbei wird ausgenutzt, dass diese Laufzeit von einer Geschwindigkeitskomponente des Fluids parallel zu einer Ausbreitungsrichtung eines Ultraschallstrahls 8 durch das Fluid abhängt. Aus dieser Laufzeitdifferenz kann somit eine über den Pfad des jeweiligen Ultraschallstrahls 8 ermittelte Flussgeschwindigkeit in Richtung des jeweiligen Ultraschallstrahls 8 und somit näherungsweise eine gemittelte Strömungsgeschwindigkeit in dem von dem Ultraschallstrahl 8 durchquerten Volumen ermittelt werden.

Um einerseits eine Anordnung der Schwingungswandler 5, 6 außerhalb des Messrohrs zu ermöglichen und andererseits eine Empfindlichkeit bezüglich unterschiedlicher Strömungsgeschwindigkeiten an unterschiedlichen Positionen des Strömungsprofils zu reduzieren, wird durch den ersten Schwingungswandler 5 nicht direkt ein Ultraschallstrahl 8, also eine Druckwelle, in dem Fluid induziert. Stattdessen wird durch den Schwingungswandler 5 eine geführte Welle, nämlich eine Lamb-Welle, in der Seitenwand 9 angeregt. Solche Wellen können angeregt werden, wenn die Dicke 10 der Seitenwand vergleichbar mit der Wellenlänge der Transversalwelle im Festkörper ist, welche sich aus dem Verhältnis der Schallgeschwindigkeit der Transversalwelle im Festkörper und der angeregten Frequenz ergibt.

Die durch den Schwingungswandler 5 in der Seitenwand 9 angeregte geführte Welle ist schematisch durch den Pfeil 11 dargestellt. Durch die geführte Welle werden Kompressionsschwingungen des Fluids angeregt, die im gesamten Ausbreitungspfad der geführten Wellen in das Fluid abgestrahlt werden. Dies ist schematisch durch die in Strömungsrichtung zueinander versetzten Ultraschallstrahlen 8 dargestellt. Die abgestrahlten Ultraschallstrahlen 8 werden an der gegenüberliegenden Seitenwand 12 reflektiert und über das Fluid zurück zu der Seitenwand 9 geführt. Dort regen die auftreffenden Ultraschallstrahlen 8 erneut eine geführte Welle der Seitenwand 9 an, die schematisch durch den Pfeil 13 dargestellt ist und die durch den Schwingungswandler 6 erfasst werden kann, um die Laufzeit zu bestimmen. Alternativ könnte eine Erfassung der Schwingungen über den Schwingungswandler 15 erfolgen, der an der Seitenwand 12 angeordnet ist.

Im gezeigten Beispiel werden die Ultraschallstrahlen 8 auf ihrem Weg zu den Schwingungswandlern 6, 15 nicht bzw. nur einmal reflektiert. Es wäre selbstverständlich möglich, eine längere Messstrecke zu nutzen, wobei die Ultraschallstrahlen 8 mehrfach an den Seitenwänden 9, 12 reflektiert werden.

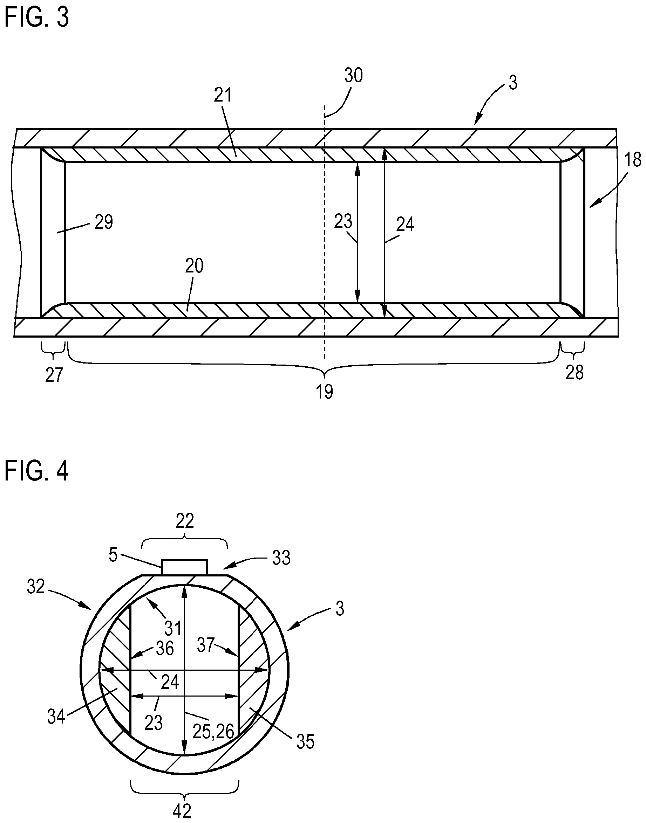

Die Messung von Laufzeiten von angeregten Wellen von dem Schwingungswandler 5 zu dem Schwingungswandler 6 und umgekehrt und somit auch eine ermittelte Laufzeitdifferenz ist aufgrund einer Zeitauflösung der Erfassung, aufgrund von produktionsbedingten Toleranzen und aus anderen Gründen fehlerbelastet. Dies führt dazu, dass bei niedrigen Durchflussmengen teils keine ausreichende Messgenauigkeit mehr erreicht werden kann. In der Messeinrichtung 1 ist im Innenraum 4 des Messrohrs 3 daher ein Messeinsatz 18 angeordnet, der in einem Messabschnitt 19, der sich über den zwischen den Schwingungswandlern 5, 6 liegenden Längsabschnitt des Messrohrs 3 hinaus erstreckt, den für das Fluid zur Verfügung stehenden Strömungsquerschnitt reduziert. Der Aufbau dieses Messeinsatzes 18 wird im Folgenden im Detail mit Bezug auf dies Figuren 2 und 3 näher erläutert.

Der Messeinsatz 18 ist im Messabschnitt 19 durch zwei Messeinsatzabschnitte 20, 21 gebildet, die an den Seitenwänden des Messrohrs 3 anliegen. Dies führt dazu, dass der Durchmesser 23 des durch die Fluidströmung nutzbaren Strömungsquerschnitts durch den Messeinsatz 18 in eine Querrichtung des Messrohrs 3 gegenüber dem Innendurchmesser 24 des Messrohrs 3 reduziert ist. Zugleich liegen im Messabschnitt 19 der Umfangsabschnitt 22, an dem die Schwingungswandler 5, 6 angeordnet sind, sowie der gegenüberliegende Umfangsabschnitt 42 frei, sodass in diesen Bereichen im Wesentlichen ohne einen Einfluss des Messeinsatzes 18 in der Seitenwand 9 geführte Wellen Kompressionsschwingungen im Fluid anregen können, die Kompressionsschwingungen an der Seitenwand 3 reflektiert werden können und die an der Seitenwand 9 einlaufenden Kompressionsschwingungen dort wiederum geführte Wellen anregen können. Dies führt dazu, dass der Durchmesser 25 des Strömungsquerschnitts in die Hochrichtung der Messeinrichtung 1 gleich dem Innendurchmesser 26 des Messrohrs 3 in diese Richtung ist.

Um einerseits die Handhabung des Messeinsatzes 18 zu vereinfachen und andererseits eine strömungsrichtende Funktion bereitzustellen, sind außerhalb des Messabschnittes 19 in einem Zuflussabschnitt 27, aus dem Fluid in den Messabschnitt 19 strömt, und in einem Abflussabschnitt 28, über den das Fluid aus dem Messabschnitt 19 strömt, Querstreben 29, vorgesehen, durch die der Durchmesser des Strömungsquerschnitts in die Hochrichtung reduziert wird. Dies kann beispielsweise dazu führen, dass einströmendes Fluid gezielt verwirbelt wird, um ein weitgehend turbulentes Strömungsprofil im Messabschnitt 19 zu erreichen und somit den Einfluss der Seitenwände auf das Strömungsprofil zu reduzieren. Die Strömungskonditionierung in dem Zuflussabschnitt 27 bzw. im Abflussabschnitt 28 kann ergänzend oder alternativ auch dazu dienen, eine Symmetrie des Strömungsprofils zu brechen, um beispielsweise ein plötzliches Umschlagen des Strömungsprofils zwischen zwei äquivalenten Strömungsprofilen zu vermeiden.

In dem Ausführungsbeispiel gemäß der Figuren 1 bis 3 ist der Messeinsatz 18 einteilig ausgebildet. Alternativ wäre es möglich, den Messeinsatz 18, wie in Fig. 3 schematisch durch die Linie 30 gezeigt ist, in zwei Längsabschnitte zu unterteilen, die beispielsweise von unterschiedlichen Richtungen in das Messrohr 3 eingeschoben werden können. Dies ist besonders dann vorteilhaft, wenn sich das Messrohr 3 und der Messeinsatz 18 jenseits des Messabschnitts 19 senkrecht zur Durchflussrichtung weiten.

Um eine Auswertung der Messdaten zu vereinfachen, sollen die Ultraschallstrahlen 8 vorzugsweise mit einem einzigen Rayleigh-Winkel 14 in das Fluid abgestrahlt werden. Dies kann dadurch erreicht werden, dass eine möglichst modenreine Anregung der Seitenwand 9 erfolgt, so dass eine Lamb-Welle angeregt wird, die im Wesentlichen nur eine einzige Mode aufweist. Dies kann beispielsweise dadurch erreicht werden, dass eine Anregungsfrequenz gewählt wird, bei der nur genau zwei Schwingungsmoden einer Lamb-Welle, nämlich eine asymmetrische Schwingungsmode und eine symmetrische Schwingungsmode, anregbar sind. Werden nun beispielsweise zwei Schwingelemente 16 in jedem der Schwingungswandler 5, 6 genutzt, die jeweils einen Anregungsbereich 17 der Seitenwand 9 anregen, um eine jeweilige Teilwelle in die Seitenwand 9 einzukoppeln, können der Abstand der Schwingelemente 16 und die genutzten Anregungssignale derart aufeinander abgestimmt werden, dass bei einer Überlagerung der durch die einzelnen Schwingelemente 16 angeregten Teilwellen die nicht gewünschte Mode im Wesentlichen vollständig ausgelöscht wird, womit eine im Wesentlichen modenreine Anregung der verbleibenden Mode erreicht wird.

Fig. 4 zeigt eine Detailansicht einer alternativen Ausgestaltung der Messeinrichtung 1. Hierbei wird ein Messrohr 3 genutzt, dessen Innenfläche 31 und Außenfläche 32, abgesehen von einem abgeflachten Abschnitt 33, kreisförmig sind. Durch den abgeflachten Abschnitt 33, der sich über den Umfangsabschnitt 25, an dem die Schwingungswandler 5, 6 angeordnet sind, erstreckt, wird erreicht, dass die geführte Welle im Wesentlichen ausschließlich in diesem Umfangsabschnitt geführt wird.

Statt eines einzelnen Messeinsatzes, der durch zwei Messeinsatzabschnitte den Strömungsquerschnitt begrenzt, werden in dem Ausführungsbeispiel gemäß Fig. 4 zwei separate Messeinsätze 34, 35 verwendet. Auch in diesem Ausführungsbeispiel wird der Durchmesser 23 des Strömungsquerschnitts dadurch eingeschränkt, dass durch die Messeinsätze 34, 35 parallele Seitenwände 36, 37 ausgebildet werden. Somit resultiert ein näherungsweise rechteckiger Strömungsquerschnitt im Messabschnitt 19.

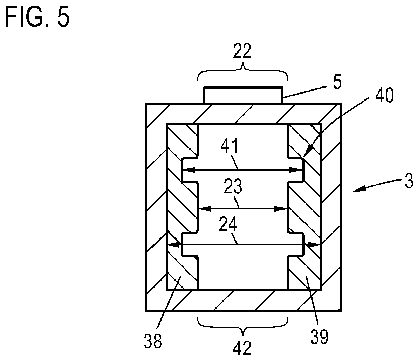

Fig. 5 zeigt eine weitere Variante der Messeinrichtung 1, wobei in dem Messrohr 3 der Strömungsquerschnitt beidseitig durch Messeinsätze 38, 39 begrenzt wird, die jeweils sich in Längsrichtung des Messrohrs 3 erstreckende Vertiefungen 40 aufweisen, die den Strömungsquerschnitt vergrößern, indem sich der Durchmesser in Querrichtung von dem Durchmesser 23 im Bereich der Vertiefungen auf den Durchmesser 41 weitet. Da im Wesentlichen nur jener Bereich von Ultraschallstrahlung durchstrahlt wird, der zwischen dem Umfangsabschnitt 22, an dem die Schwingungswandler 5, 6 angeordnet sind, und dem gegenüberliegenden Umfangsabschnitt 42 liegt, ist eine Laufzeitdifferenz zwischen der Laufzeit einer Welle von dem Schwingungswandler 5 zu dem Schwingungswandler 6 und umgekehrt im Wesentlichen unabhängig von der Strömungsgeschwindigkeit innerhalb dieser Vertiefungen 40. Bei relativ niedrigen Strömungsgeschwindigkeiten resultiert im Bereich der Vertiefungen eine Strömungsgeschwindigkeit, die aufgrund der stärkeren Interaktion mit den durch die Messeinsätze 38, 39 gebildeten Wänden deutlich geringer ist als im mittleren Bereich des Strömungsquerschnitts. Bei zunehmend höherer Strömungsgeschwindigkeit wird auch die Strömung im Bereich der Vertiefungen 40 zunehmend turbulent, womit ein zunehmend größerer Teil des Fluids durch den Bereich der Vertiefungen 40 geführt wird. Dies führt dazu, dass die Strömungsgeschwindigkeit im berücksichtigen Bereich zwischen den Umfangsabschnitten 25, 26 und somit eine gemessene Laufzeitdifferenz nicht mehr linear mit dem Durchflussvolumen steigt, sondern zumindest in einem gewissen Bereich langsamer steigt als das Durchflussvolumen. Hierdurch kann erreicht werden, dass einerseits eine hohe Messgenauigkeit bei geringen Durchflüssen erreicht wird und andererseits der Druckabfall an der Messeinrichtung 1 bei hohen Durchflüssen relativ gering ist.

Da die erläuterte Messeinrichtung in allen genannten Beispielen wenigstens einen separat von dem Messrohr ausgebildeten Messeinsatz aufweist, können mit geringem Aufwand verschiedene Messeinrichtungen aufgebaut werden. Beispielsweise kann problemlos der Messeinsatz in dem Ausführungsbeispiel gemäß Figuren 1 bis 3 durch die mit Bezug auf Fig. 5 erläuterten Messeinsätze ausgetauscht werden. Es ist auch möglich, dass Messeinsätze mit verschiedener Dicke genutzt werden, sodass der Durchmesser 23 in Querrichtung bedarfsgerecht variiert werden kann. Die Messrohre 3 können beispielsweise aus Metall hergestellt sein, um eine geringe Bedämpfung einer geführten Welle der Seitenwand 9 des Messrohrs zu ermöglichen. Um eine einfache Herstellung zu ermöglichen, können die Messeinsätze 18, 34, 35, 38, 39 beispielsweise aus Kunststoff, insbesondere durch ein Spritzgussverfahren, hergestellt sein.

### Bezugszeichenliste

- 1: Messeinrichtung
- 2: Steuereinrichtung
- 3: Messrohr
- 4: Innenraum
- 5: Schwingungswandler
- 6: Schwingungswandler
- 7: Pfeil
- 8: Ultraschallstrahl
- 9: Seitenwand
- 10: Dicke
- 11: Pfeil
- 12: Seitenwand
- 13: Pfeil
- 14: Rayleigh-Winkel
- 15: Schwingungswandler
- 16: Schwingelement
- 17: Anregungsbereich
- 18: Messeinsatz
- 19: Messabschnitt
- 20: Messeinsatzabschnitt
- 21: Messeinsatzabschnitt
- 22: Umfangsabschnitt
- 23: Durchmesser
- 24: Innendurchmesser
- 25: Durchmesser
- 26: Innendurchmesser
- 27: Zuflussabschnitt
- 28: Abflussabschnitt
- 29: Querstrebe
- 30: Linie
- 31: Innenfläche
- 32: Außenfläche
- 33: abgeflachter Abschnitt
- 34: Messeinsatz
- 35: Messeinsatz
- 36: Wand
- 37: Wand
- 38: Messeinsatz
- 39: Messeinsatz
- 40: Vertiefung
- 41: Durchmesser
- 42: Umfangsabschnitt

## Patentansprüche

1. Messeinrichtung zur Ermittlung einer eine Fluidströmung eines Fluids betreffenden Fluidgröße mit einer Steuereinrichtung (2), einem Messrohr (3), das dazu dient, das Fluid in eine Durchflussrichtung zu führen, und einem ersten und einem zweiten voneinander beabstandet an dem Messrohr (3) angeordneten Schwingungswandler (5, 6, 15), wobei die Steuereinrichtung (2) dazu eingerichtet ist, den ersten und/oder den zweiten Schwingungswandler (5, 6, 15) derart anzusteuern, dass eine durch eine oder eine jeweilige Seitenwand (9, 12) des Messrohrs (3) geführte Welle angeregt wird, wobei die geführte Welle Kompressionsschwingungen des Fluids anregt, die über das Fluid zu dem jeweils anderen Schwingungswandler (5, 6, 15) führbar und dort durch die Steuereinrichtung (2) zur Ermittlung von Messdaten erfassbar sind, wobei die Steuereinrichtung (2) dazu eingerichtet ist, die Fluidgröße in Abhängigkeit der Messdaten zu ermitteln, **dadurch gekennzeichnet, dass** in das Messrohr (3) wenigstens ein Messeinsatz (18, 34, 35, 38, 39) derart eingesetzt ist, dass zumindest in einem zwischen dem ersten und dem zweiten Schwingungswandler (5, 6, 15) liegenden Messabschnitt (19) des Messrohres (3) ein Durchmesser (23) des durch die Fluidströmung nutzbaren Strömungsquerschnitts durch den Messeinsatz (18, 34, 35, 38, 39) in eine Querrichtung gegenüber dem Innendurchmesser (24) des Messrohrs (3) in die Querrichtung reduziert ist und ein Durchmesser (25) des Strömungsquerschnitts in eine senkrecht auf der Querrichtung stehende Hochrichtung gleich dem Innendurchmesser (26) des Messrohres (3) in die Hochrichtung ist.

2. Messeinrichtung nach Anspruch 1, **dadurch gekennzeichnet, dass** der erste und der zweite Schwingungswandler (5, 6) an dem gleichen Umfangsabschnitt (22) des Messrohrs (3) angeordnet sind, der in die Hochrichtung von einem gegenüberliegenden Umfangsabschnitt (42) beabstandet ist, oder dass der erste und der zweite Schwingungswandler (5, 15) an einander gegenüberliegenden Umfangsabschnitten (22, 42) des Messrohrs (3) angeordnet sind, die in die Hochrichtung voneinander beabstandet sind.

3. Messeinrichtung nach Anspruch 1 oder 2, **dadurch gekennzeichnet, dass** in dem Messabschnitt (19) zwei separate Messeinsätze (34, 35, 38, 39) angeordnet sind und/oder dass ein innerhalb des Messabschnitts (19) liegender Bereich des Messeinsatzes (18) durch zwei Messeinsatzabschnitte (20, 21) gebildet wird, wobei die Messeinsätze (34, 35, 38, 39) oder die Messeinsatzabschnitte (20, 21) in die Querrichtung voneinander beabstandet sind, um den Strömungsquerschnitt in Querrichtung durch ihre einander zugewandten Wände (36, 37) zu begrenzen.

4. Messeinrichtung nach einem der vorangehenden Ansprüche, **dadurch gekennzeichnet, dass** der Strömungsquerschnitt zumindest im Messabschnitt (19) in Querrichtung durch zwei parallele Wände (36, 37) begrenzt wird, die durch den Messeinsatz (18) oder die Messeinsätze (34, 35) gebildet werden.

5. Messeinrichtung nach einem der Ansprüche 1 bis 3, **dadurch gekennzeichnet, dass** der Messeinsatz (38, 39) wenigstens eine sich in Strömungsrichtung erstreckende Vertiefung (40) aufweist, die den Strömungsquerschnitt vergrößert.

6. Messeinrichtung nach einem der vorangehenden Ansprüche, **dadurch gekennzeichnet, dass** der Querschnitt der Innenfläche (31) des Messrohrs (3) zumindest in dem Messabschnitt (19) kreisförmig oder quadratisch ist.

7. Messeinrichtung nach einem der Ansprüche 1 bis 5, **dadurch gekennzeichnet, dass** der Querschnitt der Innenfläche (31) des Messrohrs (3) zumindest in dem Messabschnitt (19) kreisförmig ist, wobei eine Außenfläche (32) des Messrohrs (3) zumindest in einem Umfangsabschnitt (22), in dem der erste und/oder der zweite Schwingungswandler (5, 6) angeordnet sind, eben ist.

8. Messeinrichtung nach einem der vorangehenden Ansprüche, **dadurch gekennzeichnet, dass** in einem außerhalb des Messabschnitts (19) liegenden Zuflussabschnitt (27) und/oder Abflussabschnitt (28) der Durchmesser des Strömungsquerschnitts in die Hochrichtung durch den Messeinsatz (18) reduziert ist.

9. Messeinrichtung nach einem der vorangehenden Ansprüche, **dadurch gekennzeichnet, dass** der Messeinsatz (18, 34, 35, 38, 39) als ein, insbesondere spritzgegossenes, Kunststoffbauteil ausgebildet ist.

10. Verfahren zur Herstellung von wenigstens zwei voneinander verschiedenen Messeinrichtungen gemäß einem der vorangehenden Ansprüche, wobei für alle Messeinrichtungen (1) gleiche Messrohre (3) verwendet werden, in die voneinander verschiedene Messeinsätze (18, 34, 35, 38, 39) eingesetzt werden, um die voneinander verschiedenen Messeinrichtungen (1) auszubilden.

## Claims

1. Measuring device for the detection of a fluid variable which relates to a fluid flow of a fluid, with a control device (2), a measuring tube (3) which serves to conduct the fluid in a throughflow direction, and a first and a second vibration transducer (5, 6, 15) which are arranged spaced apart from one another on the measuring tube (3), the control device (2) being set up to actuate the first and/or the second vibration transducer (5, 6, 15) in such a way that a shaft which is guided through one or a respective side wall (9, 12) of the measuring tube (3) is excited, the guided shaft exciting compression vibrations of the fluid which can be conducted by the fluid to the respective other vibration transducer (5, 6, 15) and can be detected there by way of the control device (2) for the determination of measuring data, the control device (2) being set up to determine the fluid variable in a manner which is dependent on the measuring data, **characterized in that** at least one measuring insert (18, 34, 35, 38, 39) is inserted into the measuring tube (3) in such a way that, at least in a measuring section (19) of the measuring tube (3), which measuring section (19) lies between the first and the second vibration transducer (5, 6, 15), a diameter (23) of the flow cross section which can be utilized by way of the fluid flow through the measuring insert (18, 34, 35, 38, 39) in a transverse direction with respect to the internal diameter (24) of the measuring tube (3) is reduced in the transverse direction, and a diameter (25) of the flow cross section in a vertical direction which lies perpendicularly on the transverse direction is identical to the internal diameter (26) of the measuring tube (3) in the vertical direction.

2. Measuring device according to Claim 1, **characterized in that** the first and the second vibration transducer (5, 6) are arranged on the same circumferential section (22) of the measuring tube (3), which circumferential section (22) is spaced apart in the vertical direction from an opposite circumferential section (42), or **in that** the first and the second vibration transducer (5, 15) are arranged on circumferential sections (22, 42) of the measuring tube (3) which lie opposite one another and are spaced apart from one another in the vertical direction.

3. Measuring device according to Claim 1 or 2, **characterized in that** two separate measuring inserts (34, 35, 38, 39) are arranged in the measuring section (19), and/or **in that** a region of the measuring insert (18), which region lies within the measuring section (19), is formed by way of two measuring insert sections (20, 21), the measuring inserts (34, 35, 38, 39) or the measuring insert sections (20, 21) being spaced apart from one another in the transverse direction, in order to limit the flow cross section in the transverse direction by way of their walls (36, 37) which face one another.

4. Measuring device according to one of the preceding claims, **characterized in that** the flow cross section is limited at least in the measuring section (19) in the transverse direction by way of two parallel walls (36, 37) which are formed by way of the measuring insert (18) or the measuring inserts (34, 35).

5. Measuring device according to one of Claims 1 to 3, **characterized in that** the measuring insert (38, 39) has at least one depression (40) which extends in the flow direction and enlarges the flow cross section.

6. Measuring device according to one of the preceding claims, **characterized in that** the cross section of the inner face (31) of the measuring tube (3) is circular or square at least in the measuring section (19).

7. Measuring device according to one of Claims 1 to 5, **characterized in that** the cross section of the inner face (31) of the measuring tube (3) is circular at least in the measuring section (19), an outer face (32) of the measuring tube (3) being planar at least in a circumferential section (22), in which the first and/or the second vibration transducer (5, 6) are/is arranged.

8. Measuring device according to one of the preceding claims, **characterized in that**, in an outflow section (28) and/or an inflow section (27) lying outside the measuring section (19), the diameter of the flow cross section is reduced in the vertical direction by way of the measuring insert (18).

9. Measuring device according to one of the preceding claims, **characterized in that** the measuring insert (18, 34, 35, 38, 39) is configured as a plastic component which is, in particular, injection-moulded.

10. Method for producing at least two measuring devices according to one of the preceding claims which are different from one another, identical measuring tubes (3) being used for all the measuring devices (1), into which measuring tubes (3) measuring inserts (18, 34, 35, 38, 39) which are different from one another are inserted, in order to configure the measuring devices (1) which are different from one another.

## Revendications

1. Dispositif de mesure destiné à déterminer une grandeur de fluide relative à un écoulement d'un fluide, le dispositif de mesure comprenant un dispositif de commande (2), un tube de mesure (3) qui sert à guider le fluide dans un sens d'écoulement, et des premier et deuxième transducteurs de vibration (5, 6, 15) disposés sur le tube de mesure (3) à distance l'un de l'autre, le dispositif de commande (2) étant conçu pour commander le premier et/ou le deuxième transducteur de vibrations (5, 6, 15) de façon à générer une onde guidée à travers une paroi latérale ou une paroi latérale respective (9, 12) du tube de mesure (3), l'onde guidée générant des vibrations de compression du fluide qui peuvent être guidées par le biais du fluide vers l'autre transducteur de vibrations respectif (5, 6, 15) où elles peuvent être détectées par le dispositif de commande (2) pour déterminer des données de mesure, le dispositif de commande (2) étant conçu pour déterminer la grandeur de fluide en fonction des données de mesure, **caractérisé en ce qu'**au moins un insert de mesure (18, 34, 35, 38, 39) est inséré dans le tube de mesure (3) de telle sorte que, au moins dans une portion de mesure (19) du tube de mesure (3) qui est située entre les premier et deuxième transducteurs de vibrations (5, 6, 15), un diamètre (23) de la section transversale d'écoulement, qui peut être utilisée par l'écoulement de fluide, est réduit par l'insert de mesure (18, 34, 35, 38, 39) dans une direction transversale par rapport au diamètre intérieur (24) du tube de mesure (3) dans la direction transversale et un diamètre (25) de la section transversale d'écoulement dans une direction verticale perpendiculaire à la direction transversale est égale au diamètre intérieur (26) du tube de mesure (3) dans la direction verticale.

2. Dispositif de mesure selon la revendication 1, **caractérisé en ce que** les premier et deuxième transducteurs de vibrations (5, 6) sont disposés sur la même portion circonférentielle (22) du tube de mesure (3) qui est espacée d'une portion circonférentielle opposée (42) dans la direction verticale, ou **en ce que** les premier et deuxième transducteurs de vibrations (5, 15) sont disposés sur des portions circonférentielles (22, 42) du tube de mesure (3) qui sont opposées l'une à l'autre et qui sont espacées l'une de l'autre dans la direction verticale.

3. Dispositif de mesure selon la revendication 1 ou 2, **caractérisé en ce que** deux inserts de mesure séparés (34, 35, 38, 39) sont disposés dans la portion de mesure (19) et/ou **en ce qu'**une région de l'insert de mesure (18), qui est située à l'intérieur de la portion de mesure (19), est formée par deux portions d'insert de mesure (20, 21), les inserts de mesure (34, 35, 38, 39) ou les portions d'insert de mesure (20, 21) étant espacé(e)s l'un(e) de l'autre dans la direction transversale afin de limiter la section transversale d'écoulement dans la direction transversale par leurs parois (36, 37) dirigées l'une vers l'autre.

4. Dispositif de mesure selon l'une des revendications précédentes, **caractérisé en ce que** la section transversale d'écoulement est limitée dans la direction transversale au moins dans la portion de mesure (19) par deux parois parallèles (36, 37) qui sont formées par l'insert de mesure (18) ou les inserts de mesure (34, 35).

5. Dispositif de mesure selon l'une des revendications 1 à 3, **caractérisé en ce que** l'insert de mesure (38, 39) comporte au moins un évidement (40) qui s'étend dans le sens d'écoulement et qui agrandit la section transversale d'écoulement.

6. Dispositif de mesure selon l'une des revendications précédentes, **caractérisé en ce que** la section transversale de la surface intérieure (31) du tube de mesure (3) est circulaire ou carrée au moins dans la portion de mesure (19).

7. Dispositif de mesure selon l'une des revendications 1 à 5, **caractérisé en ce que** la section transversale de la surface intérieure (31) du tube de mesure (3) est circulaire au moins dans la portion de mesure (19), une surface extérieure (32) du tube de mesure (3) étant plane au moins dans une portion circonférentielle (22) dans laquelle le premier et/ou le deuxième transducteur de vibrations (5, 6) sont disposés.

8. Dispositif de mesure selon l'une des revendications précédentes, **caractérisé en ce que** dans une section d'entrée (27) et/ou portion de sortie (28), situées à l'extérieur de la portion de mesure (19), le diamètre de la section transversale d'écoulement est réduit par l'insert de mesure (18) dans la direction verticale.

9. Dispositif de mesure selon l'une des revendications précédentes, **caractérisé en ce que** l'insert de mesure (18, 34, 35, 38, 39) est réalisé sous la forme d'un composant en matière synthétique, notamment moulé par injection.

10. Procédé de fabrication d'au moins deux dispositifs de mesure différents selon l'une des revendications précédentes, les mêmes tubes de mesure (3) étant utilisés pour tous les dispositifs de mesure (1), tubes de mesure dans lesquels des inserts de mesure (18, 34, 35, 38, 39) différents les uns des autres sont insérés pour former les dispositifs de mesure (1) différents les uns des autres.
